# EUROPEAN PATENT APPLICATION

(11) **EP 1 216 732 A2**
(43) Date of publication of application: **26.06.2002**
(21) Application number: 01128989.9
(22) Date of filing: 06.12.2001
(51) Int. Cl.: A63F 13/12

(54) **Electronic gaming system**

(30) Priority: 19.12.2000 GB 0030967
(71) Applicant: Nokia Corporation, 02150 Espoo (FI)
(72) Inventor: Emmerson, Francis, Camberley GU15 2LS (GB); Westwater, David, Avondale, Ash Vale, Aldershot GU12 5JY (GB)
(74) Representative: Hibbert, Juliet Jane Grace

(57) **Abstract**

The present invention resides in a method of modifying games content of a mobile phone, the games content comprising gaming parameters, the method comprising sending one or more selected gaming parameters from the mobile phone to a server, at the server, applying training data to the one or more selected gaming parameters to provide a modified parameter set in which one or more of the one or more selected gaming parameters is modified, sending said modified parameter set to the mobile phone, wherein the modified parameter set is used to modify the games content of the mobile phone.

By means of the invention, selected aspects or parameters of the games content of a phone can be modified remotely in a server, and the modified game parameters returned to the phone and used to reconfigure the games content to provide for new gameplay. Accordingly, whilst broadly allowing a user an element of control in how a game is to be changed, this invention provides a way of introducing new unpredictable factors into selected aspects of the gameplay. This consequently increases the variety of gameplay and elevates the challenge of the game to the user.

## Description

The present invention relates to electronic games, in particular electronic games in the context of mobile gaming.

Mobile gaming is a term used to refer to all aspects of electronic games in the context of mobile communications. Nowadays, it is not uncommon for portable radio communication devices such as mobile phones to have, preloaded on a memory of the phone, content relating to one or more electronic games that can be played on the mobile phone through the phone's User Interface usually involving a display and keys. A mobile phone user who wishes to play one of the pre-stored games must navigate through the phone's various menu options to the Games options and then select the particular electronic game he or she wishes to play. Certain keys of the mobile phone's keypad will be pre-assigned so as to be able to be used by the user for controlling certain predetermined features of the game in relation to other features of the game which are under the control of the software of the game. In this way, the user can be regarded as playing 'against the computer'. Additionally, in a two (or more) player game, each user (player) has control over his/her particular game's character(s) with which he/she plays against the other player(s).

In order to afford variation in the gameplay, in-built into electronic games software on mobile phones, typically, is the ability to have different levels of gameplay ranging in complexity. This is usually implemented in the software by making changes to characters, features, aspects and other parameters of the basic gameplay.

Against this background, the present invention, in one aspect resides in a method of modifying games content of a mobile phone, the games content comprising gaming parameters, the method comprising sending one or more selected gaming parameters from the mobile phone to a server, at the server, applying training data to the one or more selected gaming parameters to provide a modified parameter set in which one or more of the one or more selected gaming parameters is modified, sending said modified parameter set to the mobile phone, wherein the modified parameter set is used to modify the games content of the mobile phone.

Expressed alternately, the present invention resides in a method of modifying games content of a mobile phone, the games content setting out gameplay and comprising gaming parameters, the method comprising sending one or more selected gaming parameters from the mobile phone to a server, at the server, applying training data to the one or more selected gaming parameters to provide a modified parameter set in which one or more of the one or more selected gaming parameters is modified, sending said modified parameter set to the mobile phone, wherein the modified parameter set is used to modify the gameplay on the mobile phone.

In this context, training data includes any algorithm or any other form of data that is designed to be applied to gaming parameters so as to change certain attributes of the gaming parameters.

By means of the invention, selected aspects or parameters of the games content of a phone can be modified remotely in a server, and the modified game parameters returned to the phone and used to reconfigure the games content to provide for new gameplay. Accordingly, whilst broadly allowing a user an element of control in how a game is to be changed, this invention provides a way of introducing new unpredictable factors into selected aspects of the gameplay. This consequently increases the variety of gameplay and elevates the challenge of the game to the user.

The invention thus provides for original games content, training data, and modified games content. Original games content comprises the game software required to characterise gaming parameters and allow play of the game in its original version. Original games content defines the look and feel of the game. Training data comprises adaptations for gaming parameter. Modified games content comprises the original game modified by the trained gaming parameters.

The games content on the mobile phone may itself have been previously modified by trained gaming parameter data, so in this sense the games content is not the original games content, but is the games content currently enabled on the phone.

Original games content is provided for storage on and use by a mobile phone and training data is provided on a server.

There may be monitoring and accounting means for monitoring use of the training facility on the server for computing a payment to be made by the user.

The games content may include a sports team under the control of the user. In such a form of the invention, the user sends the team (or even specific players thereof) from the mobile phone to a 'training camp' located on a server. The 'training camp' may be on a specific Games dedicated site stored on the server. The team is put through a 'training' programme in the training camp. Such training is under the control of the server, which for example applies an algorithm to the data representing the team, and this algorithm has the affect of modifying the data to output a 'trained' team. The trained team is sent to the mobile phone, and here it is used in the gameplay to new effect.

Training data used to train the team may be related to characteristics of the team such as its strength, or speed, or defensive ability, or attacking ability, or any other attributes that may be associated with the team. The actual training received by the team is most preferably outside of the control of the user, although there may be choices available to the user as to certain broadly predefined specific training programmes that the teams may be put through. For example, the user may elect to put his team through a stamina training camp. However, the precise eventual outcome of the team from the training is, in preferred embodiments, not entirely predictable. Additionally, since there is only one version of the team available, once the team is transferred from the phone to the server, data representing the team is removed from the phone.

Accordingly, as data manipulation on a team is carried out remotely in the server, the limited memory of mobile phone is not taken up with performing such tasks. Hence, the software requirement and memory space needed for electronic games on mobile phones is not as demanding as it otherwise would be.

A further advantage is that the available training camps on servers can be updated and modified centrally.

Furthermore, the content provider, who may be the mobile phone manufacturer or a third party, continues to design and develop more challenging and innovative training camps for the game, whilst the user will continue to remain interested and engaged. In addition, the mobile phone manufacturer or content provider benefits in increased traffic and stimulating content for the mobile phone manufacturer's internet site.

The invention from another aspect provides a client-server system in which games content is provided on a client terminal, the games content comprising gaming parameters, and training data is provided on a server and wherein one or more selected gaming parameters is sent to the server from the client terminal and the training data is used to modify the one or more selected gaming parameters, and the trained gaming parameters are sent to the client terminal and used in the gameplay of the games content on the client terminal.

Accordingly, the invention extends to areas concerned with client-server systems and the downloading and more generally enabling the provision of content for a client terminal.

Other aspects and features of the invention are defined in the appended claims.

In order to aid a better understanding of the present invention, an embodiment of the invention will now be described. This should not be construed as limiting the invention but merely as an example of a specific way of putting the invention into effect. In particular, the invention will be described with reference to the accompanying drawings in which:
Figure 1 is a schematic of client-server system in accordance with a preferred arrangement of the present invention;
Figure 2 is a block diagram illustrating selected functional aspects of the client server system of Figure 2; and
Figure 3 is a flow chart outlining a preferred way of effecting downloading of content in the client-server system of Figures 1 and 2.

In general terms, an electronic game, designed to be played on a mobile phone, is created by a content provider, who may be the mobile phone manufacturer or a third party. Typically, the electronic game comprises a games engine that provides the general functions of the game including instructions and routines for gameplay, for example by drawing of library functions that define how games characters may interact during game play. The electronic game also has gaming parameters that set out the environmental factors that define the backdrop to the game. Then there are gaming parameters relating to characters of the games, these being entities of the game under user control and with which the user during gameplay associates himself, for instance a team in a sports game, or a fighter in a combat game. In the games content, a combination of these factors define the look and feel of the game, its characters, its objectives, its rules of operation.

The content provider additionally creates training data for the game. Such training data comprises algorithms for gaming parameters that when applied thereto modifies the original game content to result in modified games content. Modified games content has associated with it an identifier tag that identifies the training data that has been used in its construction.

The mobile phone manufacturer may embed the original games content onto the phone during manufacture, or authorise downloading of the original games content onto the phone.

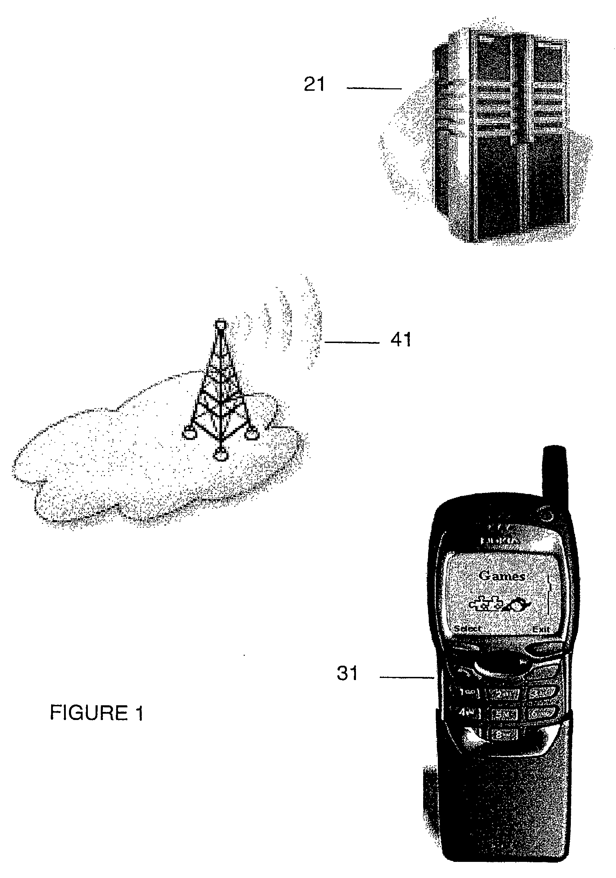

Referring to Figure 1, there is shown a server 21 onto which a mobile phone manufacturer or content provider stores the training data, an end user's mobile phone 31 that contains the games content and which is serviced by an operator network 41. The training data that is loaded and stored by the mobile phone manufacturer onto server 21 has a unique URL address. In this way, the training data is accessible thorough the end user's phone 31. Access to the server may be by methods known in the art via dial up numbers such as bulletin boards, and World-Wide-Web (WWW) addressing using URLs where the phone is WAP or iMODE enabled.

Turning to the end user, the end user has a mobile phone 31 carrying the original games content, and is provided with a wireless communication service through the games operator network 41. The end user may play the game in either a stand-alone fashion or interactively with other users. In some games, the user may find that despite repeated game plays he is not making satisfactory progress towards a desired level of proficiency in the game. In such a situation the user may wish to send his games entity, such as a team, to a training camp to be coached for improved performance in the game.

Hence, by means of the preferred arrangement of the invention, the user has the option to send selected features of the game (eg. his team) to a training camp on a server and then have returned to the phone, altered gaming features so as to create a new gaming context. The end user accordingly requests the uploading of selected gaming parameters from the phone 31 to the server 21 through the operator's network 41. If the request is approved, training data is applied to the selected gaming parameters at the server 21 and subsequently transferred to the end user's phone 31. A more detailed description of this process is given below.

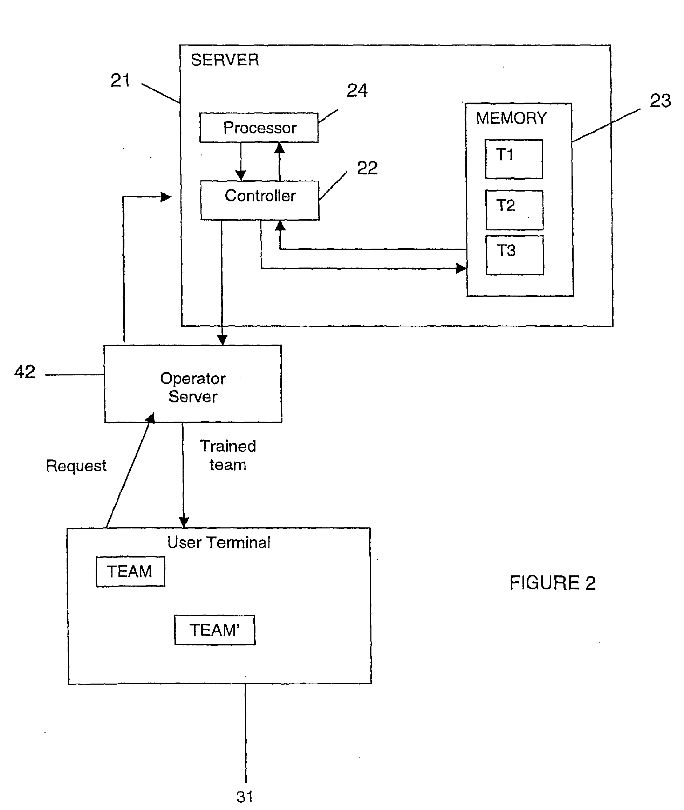

Referring to Figure 2, there is shown in greater detail an end user mobile phone terminal 31, which through the operator network having an operator server 42 accesses a mobile phone manufacturer's server 21 having a memory containing training data (T1, T2, T3).

An end user 31 who wishes to have changes made to his/her team of a game makes a request through the mobile phone 31 to send the team to a training camp at a server. The team of players may be a team that the user has created in the game in the mobile phone himself. The request may be a direct menu-driven option that the user clicks onto to send the request. The menu-driven option could be a direct link from games menu option, which would save having to open, for instance a browser application of the mobile phone. As another example, the gaming parameter upload option may appear automatically on the phone display at an appropriate point while a game is being played, or at the end of a game, for instance on unsuccessful completion of a particular level. The user in response decides whether or not to activate the uploading.

Thus a request is transmitted from the mobile phone for the use of training data at a server on a particular team. The end user may have a preference for what type of training the team requires from the different training camps accessible on the server, and so the request may contain an identifier (eg. T1, T2, or T3) of the training camp required. Sending the request removes the team from the mobile phone.

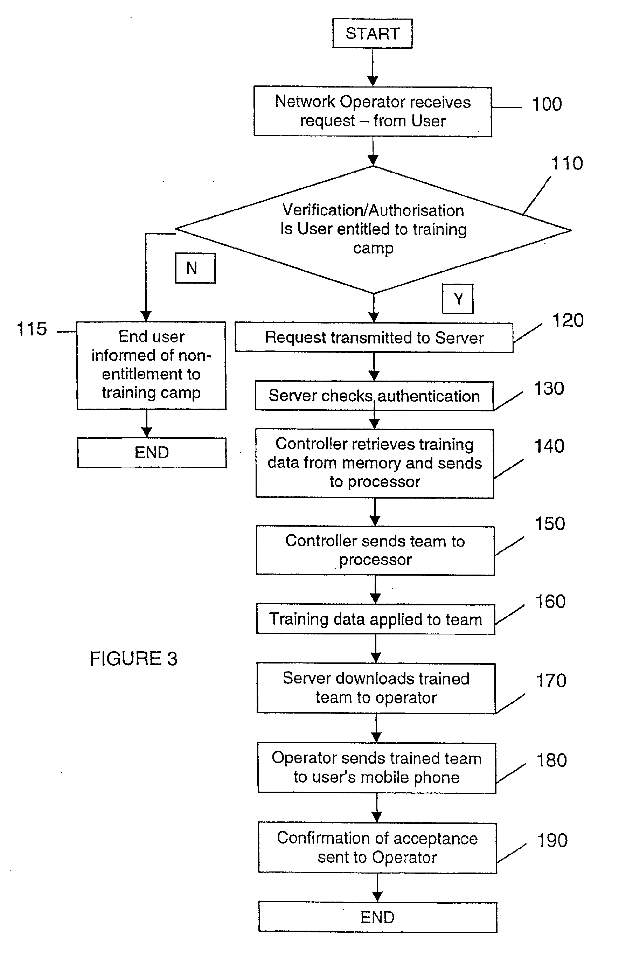

The user's request is received first by the network operator at the operator server 42 having a gateway, this is indicated in Figure 3 at block 100. Here a series of checks is carried out in relation to the request in an authentication process. As indicated at block 110 in Figure 4, it is checked whether the user subscribes to the appropriate tariff to entitle him/her to access the server in order to use the training camps. Accordingly, the user's identity is checked along with his/her tariff subscription. If it is determined that the user is on the appropriate tariff the operators server forwards the request to the URL address identifying mobile phone manufacturer's server 21, as indicated at block 120.

If, on the other hand, the user is identified as not being a subscriber on the appropriate tariff to allow use of a training camp, flow passes to block 115 in which the operator server sends a message to the user denying him/her the request. At this juncture, the message may contain information informing the user of steps he may take in order to apply to subscribe to the correct tariff for obtaining the benefit of training camp.

Returning to the case where the network operator accepts the user and engages the manufacturer's server for the download, the request received at the server undergoes further authentication and identification at block 130, for instance to check for compatibility between the user games content and the training camp requested. This may be on the basis of the identifier tag associated with the team data and the requested training camp.

Once accepted, the request is further processed in the server in a games controller 22. The games controller 22 accesses the memory storage 23 holding the required training algorithm representative of the camp using a memory address. From there at block 140 the training algorithm is retrieved by the controller and transferred to a processor 24. The controller 22 at block 150 also instructs the passage of the team to be trained to the processor 22. In the processor 22 the training algorithm is applied to the team according to block 160. The training algorithm makes changes to the data of the team and outputs a trained team in accordance with the algorithm to controller 22. Thus, it will be appreciated that control is removed from the user as to events that occur when the team is in training camp, and so there is an element of risk-taking involved as random factors may mean that the outcome is not quite what the player expected. For instance, sending a team to training camp could result in a detrimental action, such as a player breaking a leg. However, the user may be able to be allowed to select what camp the team is to be sent to and what training programme he/she wishes the team to be put through.

Following appropriate checks the trained team is transmitted according to block 170 to the operator server 42.

The operator server receives the trained team and verifies that it is the team according to the requested training programme. Following verification the operator server downloads the trained team to the requesting user's mobile phone as indicated at block 180.

On receipt of the trained team at the mobile phone, as message is displayed on the phone's LCD indicating that trained team has arrived. The mobile phone's controller carries out a series of error checks to ensure that all the data has been faithfully received, if not then an error message is transmitted to the operator to re-send the trained team. If the error checks confirm complete error free receipt of the trained team the user may be afforded an opportunity to view the trained team in order to confirm that it is to his approval. The user then uses the menu options to accept and save the trained team onto the phone memory as indicated at block 170 in Figure 4 and indicated by TEAM' in Figure 3. Storing the trained team into the mobile phone memory modifies the previously stored games data for instance by introducing the newly trained up team into the memory space reserved for the previous gaming parameters of the previous team, resulting in modified games content thereby avoiding taking up substantially extra memory space.

The operation of saving the new in-game data software on the phone causes a signal to be transmitted to the operator that the game has been saved in the phone. This acts as a confirmation of receipt and acceptance by the user as at block 190.

Transfer of signals between the user's mobile phone and the server may use any appropriate modes such as WAP, SMS, as well as wired networks.

In other arrangements, the operator may simply provide the gateway for establishing the links to the server, the authentication and verification processes being carried out in the server. Additionally, the user may, rather than have the trained team automatically sent to his mobile phone, be required to return to the server and collect the trained team from the server.

The present invention may be embodied in other specific forms without departing from its essential attributes. Other kinds of training camps are envisaged by the present invention. For example:
- sending an athlete to sprint training, a possible detrimental affect being an injury to a hamstring,
- sending a wizard to sorcery school where he can learn new spells,
- sending an adventurer to train to jump and climb better,
- sending a golfer to golfing school to improve his swing,
- sending a golf course to have new holes cut in the green.

Reference should thus be made to the appended claims and other general statements herein rather than to the foregoing description as indicating the scope of the invention.

Furthermore, each feature disclosed in this specification (which terms includes the claims) and/or shown in the drawings may be incorporated in the invention independently of other disclosed and/or illustrated features. In this regard, the invention includes any novel feature or combination of features disclosed herein either explicitly or any generalisation thereof irrespective of whether or not it relates to the claimed invention or mitigates any or all of the problems addressed.

The appended abstract is file herewith is included in the specification by reference.

## Claims

1. A method of modifying games content of a mobile phone, the games content comprising gaming parameters, the method comprising sending one or more selected gaming parameters from the mobile phone to a server, at the server, applying training data to the one or more selected gaming parameters to provide a modified parameter set in which one or more of the one or more selected gaming parameters is modified, sending said modified parameter set to the mobile phone, modifying the games content of the mobile phone using the modified parameter set.

2. A method according to claim 1, wherein the training data comprises an algorithm.

3. A method according to claim 1 or clam 2, wherein the gaming parameters comprise character type parameters.

4. A method according to claim 3, wherein the character type parameters comprises a team.

5. A method according to claim 4, wherein the team is created by the user in the mobile phone.

6. A method according to any preceding claim, wherein the sending of gaming parameters and modified gaming parameters are by signals over the air.

7. A method for changing characteristics of an electronic game of an electronic device, the games content comprising gaming parameters, said method comprising: providing said games content for storage on and use by the device, providing training data at a server for modifying gaming parameters, applying said training data to one or more selected gaming parameters uploaded to the server from the device to provide a trained parameter set, altering the electronic game of the device by applying to it the trained parameter set downloaded from the server.

8. A client-server system in which games content is provided on a client terminal, the games content comprising gaming parameters and training data is provided on a server and wherein one or more selected gaming parameters is sent to the server from the client terminal and the training data is used to modify the one or more selected gaming parameters, and the trained gaming parameters are sent to the client terminal and used in the gameplay of the games content on the client terminal.

9. A gaming device including games content comprising gaming parameters, and adapted to download content from a server, the device having a memory, and a controller, the memory storing original and/or modified games content, the controller being operable to transmit a request for training selected gaming parameters of the games content in accordance with training data provided on the server, the request comprising an identifier of the required training data, the device receiving trained gaming parameters data from a server, and the controller storing said trained gaming parameters on said memory.

10. A gaming device according to claim 9, wherein the device is a handheld electronic device.

11. A gaming device according to claim 9, wherein the device is a games console or a personal computer.

12. A gaming device according to claim 9, 10 or 11, wherein the device includes a transceiver and the gaming parameters and modified gaming parameters are transmitted by signals over the air.

13. A gaming device according to claim 9, 10 or 11, wherein gaming parameters and modified gaming parameters are transmitted by signals through wired networks.

14. A computer program product on a terminal having an electronic game stored on a memory thereof, the product enabling selecting gaming parameters of the game, sending said selected gaming parameters to a remote server, and storing received modified gaming parameters on the memory of the terminal.

15. A computer program product on a server, the product enabling the application of training data to gaming parameters of an electronic game received from a remote terminal, and sending modified gaming parameters to said terminal.

16. A method for changing characteristics of an electronic game of an electronic device, the games content comprising gaming parameters, said method comprising: sending selected gaming parameters to a server, receiving modified gaming parameters from the server, changing characteristics of the electronic game using the modified gaming parameters.
